# EUROPÄISCHE PATENTSCHRIFT

(11) **EP 2 222 519 B1**
(45) Veröffentlichungstag und Bekanntmachung des Hinweises auf die Patenterteilung: **08.04.2015**
(21) Anmeldenummer: 08859052.6
(22) Anmeldetag: 08.12.2008
(51) Int. Cl.: B60R 25/0215

(54) **VORRICHTUNG ZUR ANSTEUERUNG EINES SPERRGLIEDES**
DEVICE FOR ACTIVATING A BLOCKING ELEMENT
DISPOSITIF DE COMMANDE D'UN ORGANE DE VERROUILLAGE

(30) Priorität: 10.12.2007 DE 102007059713
(43) Veröffentlichungstag der Anmeldung: 01.09.2010
(73) Patentinhaber: Huf Hülsbeck & Fürst GmbH & Co. KG, 42551 Velbert (DE)
(72) Erfinder: TRISCHBERGER, Werner, 85229 Langenpettenbach (DE)
(74) Vertreter: Vogel, Andreas
(86) Internationale Anmeldenummer: PCT/EP2008/067040
(87) Internationale Veröffentlichungsnummer: WO 2009/074543

(56) Entgegenhaltungen:
- DE-A1-102004 001 511
- DE-B3- 10 247 802

## Beschreibung

Die Erfindung betrifft eine Vorrichtung zur Ansteuerung eines Sperrgliedes eines funktionswesentlichen Bauteils, insbesondere einer Lenksäule oder eines Gangschalthebels eines Kraftfahrzeuges, mit einem Getriebe, das mit dem Sperrglied in mechanischer Wirkverbindung steht, das in eine Verriegelungsstellung und in eine Entriegelungsstellung und umgekehrt bewegbar ist, wobei in der Verriegelungsstellung das Sperrglied in das funktionswesentliche Bauteil eingreift und in der Entriegelungsstellung das Sperrglied losgelöst vom funktionswesentlichen Bauteil ist.

Im Stand der Technik sind Vorrichtungen zur Ansteuerung eines Sperrgliedes einer Lenksäule eines Kraftfahrzeugs bekannt, wobei ein Sperrglied vorgesehen ist, dass über ein Getriebe in zwei Positionen bewegt werden kann. Zum einen kann das Sperrglied eine Verriegelungsstellung einnehmen, in der es durch eine Öffnung aus der Vorrichtung herausragt und in einer Wirkverbindung mit der Lenksäule steht. Zum anderen kann das Sperrglied eine Entriegelungsstellung einnehmen, bei der es weitestgehend innerhalb der Vorrichtung sich befindet und nicht in die Lenksäule eingreift. Es hat sich nachteiligerweise gezeigt, dass beispielsweise bei einer Fehlstellung der Lenksäule das Sperrglied nicht eine Verriegelungsstellung einnehmen kann, da es beispielsweise beim Austritt aus der Vorrichtung auf einen Zahn der Lenksäule trifft. Befindet sich das Kraftfahrzeug in einem derartigen Zustand, in der das Sperrglied zwar seine Entriegelungsstellung verlassen hat, jedoch die Verriegelungsstellung aufgrund einer Fehlstellung der Lenksäule nicht erreicht hat, kann durch Manipulationen von außen, beispielsweise durch Magneten oder durch gezielte Prellschläge das Sperrglied in seine Entriegelungsstellung geführt werden.

Das Dokument DE 10 2004 001 511 offenbart eine gattungsgemäße Vorrichtung zur Ansteuerung eines Sperrgliedes.

Es ist Aufgabe der vorliegenden Erfindung, eine Vorrichtung zur Ansteuerung eines Sperrgliedes zu schaffen, bei der die genannten Nachteile vermieden werden, insbesondere eine Vorrichtung bereitgestellt wird, bei der das Sperrglied in seiner Position gesichert wird, obwohl eine Fehlstellung des funktionswesentlichen Bauteils vorliegt.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass das Getriebe derart ausgeführt ist, dass das Sperrglied, bei einer Fehlstellung des Bauteils mindestens in eine Zwischenstellung bringbar ist, die zwischen der Verriegelungsstellung und der Entriegelungsstellung liegt, wobei das Getriebe ein Führungsmittel aufweist, das formschlüssig das Sperrglied sowohl in der Zwischenstellung als auch in der Verriegelungsstellung hält, so dass eine Bewegung des Sperrgliedes in die Entriegelungsstellung blockiert ist.

Einer der wesentlichen Vorteile dieser Erfindung ist, dass bei einer Fehlstellung des funktionswesentlichen Bauteils, bei der das Sperrglied nicht in die Verriegelungsstellung sich bewegen kann, das Sperrglied durch das Führungsmittel erfasst wird, so dass das Sperrglied in seiner Zwischenstellung zuverlässig gehalten wird. Während das Getriebe im aktivierten Zustand ist, verfährt das Sperrglied entlang des Führungsmittels. Wird durch den Benutzer die Fehlstellung des Bauteils aufgehoben, verlässt das Sperrglied den Kontakt mit dem Führungsmittel und erreicht die geforderte Verriegelungsstellung. Somit bietet die vorliegende Erfindung die Möglichkeit, dass eine Überführung des Sperigliedes aus der Zwischenstellung in die Verriegelungsstellung bewusst erzielt werden kann. Jedoch verhindert das Führungsmittel eine Bewegung des Sperrgliedes aus der Zwischenstellung in die Entriegelungsstellung, wodurch vorteilhafterweise Manipulationen über gezielte Prellschläge oder Magneten ausgeschlossen werden können,

In einer bevorzugten Ausführungsform der Erfindung weist das Getriebe ein Antriebsrad auf, das mit einer Führungsgeometrie ausgeführt ist, die mit einem Führungselement des Sperrgliedes zusammenwirkt, indem bei der Bewegung des Sperrgliedes in seine jeweilige Stellung das Führungselement entlang der Führungsgeometrie verfährt, wobei bei einer Fehlstellung des Bauteils das Führungselement an dem an der Führungsgeometrie ausgebildeten Führungsmittel kontaktierend anliegt. Vorteilhafterweise wird das Führungselement, das am Sperrglied angeordnet ist, im aktivierten Zustand des Getriebes am Antriebsrad entlang der Führungsgeometrie, die als eine Art Kulissenführung ausgeführt ist, entsprechend bewegt. In einer möglichen Ausführungsform der Erfindung bildet das Antriebsrad sowie die Führungsgeometrie ein einstückiges und materialeinheitliches Bauteil. Vorzugsweise weist die Führungsgeometrie eine bogenförmige Führungskontur für die Bewegung des Sperrgliedes von der Verriegelungsstellung und in eine Entriegelungsstellung und umgekehrt auf. Während das Getriebe aktiviert ist, gleitet das Führungselement entlang der Führungskontur ab, wodurch eine gezielte Bewegung des Sperrgliedes in seine jeweilige Stellung erzielt werden kann.

In einer weiteren Ausführungsform der Erfindung weist das Getriebe einen Freilauf, insbesondere einen Vorlauf und einen Nachlauf auf, bei dem das Sperrglied in seiner jeweiligen Stellung verbleibt, während das Getriebe aktiviert ist. Hierdurch wird vorteilhafterweise bezweckt, dass trotz eines aktivierten Zustandes des Getriebes, bei dem sich wesentliche Bauteile des Getriebes zumindest teilweise in einem Bewegungszustand befinden, das Sperrglied in seiner jeweiligen Stellung unbeweglich verharrt. Somit können auch Motoren für die Ansteuerung des Sperrgliedes zum Einsatz kommen, die lediglich mit einer sehr einfachen Motorsteuerung arbeiten. Obwohl das Sperrglied seine Verriegelungsstellung oder Entriegelungsstellung längst erreicht hat, kann der Motor ohne Probleme noch etwas nachlaufen. Dieses gilt entsprechend für einen Vorlauf.

Vorteilhafterweise ist das Antriebsrad um eine Drehachse gelagert. Hierbei weist das Antriebsrad eine Antriebsseite und eine Abtriebsseite auf, wobei ein elektrischer Motor an der Antriebsseite angreift und die Abtriebsseite durch die Führungsgeometrie gebildet ist, die eine Bewegung des Führungselementes und des Sperrgliedes bewirkt. Um den genannten Freilauf zu erzielen, kann die Führungskontur mit einem ersten Segment und einem zweiten Segment ausgeführt sein. Hierbei weist das erste Segment einen konstanten Radius zur Drehachse des Antriebsrades auf. Im Gegensatz dazu weist das zweite Segment einen spiralförmigen Verlauf auf. Während das Führungselement entlang des ersten Segmentes geführt wird, verbleibt das Sperrglied unbeweglich in seiner jeweiligen Stellung. Erst wenn das Führungselement entlang des zweiten, spiralförmigen Segmentes verfahren wird, entsteht eine Bewegung des Sperrgliedes in die Verriegelungsstellung oder in die Entriegelungsstellung.

In einer möglichen Ausführungsvariante kann vorgesehen sein, dass das Führungsmittel als mindestens ein bogenförmig verlaufender Führungsweg ausgeführt ist, der durch eine gemeinsame Wandung zur Führungskontur beabstandet ist. Vorteilhafterweise ist das Führungselement am Sperrglied beweglich gelagert, wobei insbesondere das Führungselement federbelastet am Sperrglied angeordnet ist. Vorteilhafterweise weist das genannte Führungsmittel mehrere Führungswege auf, die treppenartig an der Führungsgeometrie ausgeführt sein können, das bedeutet, dass die Führungswege untereinander auf unterschiedlichen Höhen oder Ebenen liegen. Je nach Fehlstellung des Bauteils kann das Führungselement des Sperrgliedes auf unterschiedlichen Führungswegen des Führungsmittels verfahren werden, wobei gleichzeitig das Sperrglied seine Zwischenstellung einnimmt. Die treppenartige Ausgestaltung der Führungswege bewirkt, dass das Führungselement formschlüssig am Führungsmittel anliegt. Zweckmäßigerweise ist das Führungselement parallel zur Drehachse am Sperrglied beweglich gelagert, so dass das Führungselement zuverlässig auf jedem Führungsweg verfahren werden kann. Da das Führungselement federbelastet am Sperrglied angeordnet ist, entsteht ein zuverlässiger Kontakt zwischen dem Führungselement und dem jeweiligen Führungsweg.

Bei einer bevorzugten Ausführungsform der Erfindung befindet sich das Führungselement in der Entriegelungsstellung in einer Ausgangslage zum Sperrglied, wobei in der Zwischenstellung des Sperrgliedes die Führungsgeometrie, insbesondere das Führungsmittel, das Führungselement aus der Ausgangslage in eine weitere Lage parallel zur Drehachse bewegt. Bei dieser Ausführungsform befindet sich das Führungselement in der Ausgangslage, wenn es entlang der Führungskontur von der Verriegelungsstellung in die Entriegelungsstellung und umgekehrt bewegt wird. Liegt eine Fehlstellung des Bauteils vor, verlässt das Führungselement die Führungskontur und gelangt zum Führungsmittel, insbesondere entlang eines Führungsweges, der eine unterschiedliche Höhe zum Kontaktbereich des Führungselementes zur Führungskontur aufweist, wodurch das Führungselement seine Ausgangslage am Sperrglied verlässt und in eine weitere Lage in das Sperrglied oder aus dem Sperrglied bewegt wird.

Um eine ungewollte Bewegung des Sperrgliedes in die Verriegelungsstellung zu verhindern, steht eine Sicherheitseinheit mit dem Antriebsrad in Wirkverbindung, die das Sperrglied in der Entriegelungsstellung zusätzlich blockierend hält. Vorteilhafterweise weist das Antriebsrad eine Steuerkurve auf, durch die die Sicherheitseinheit in eine Sicherungslage und in eine Entsicherungslage bringbar ist, wobei in der Sicherungslage das Sperrglied sich in der Entriegelungsstellung und in der Entsicherungslage das Sperrglied sich in der Verriegelungsstellung befindet. Eine Bewegung des Antriebsrades um die Drehachse bewirkt, dass die Steuerkurve entsprechend die Sicherheitseinheit bewegt. Hierbei kann es vorteilhaft sein, dass die Sicherheitseinheit federbelastet, relativ zum Sperrglied verschiebbar gelagert ist. In einer besonders einfachen Aüsführungsvariante kann vorgesehen sein, dass die Steuerkurve exzentrisch am Antriebsrad angeordnet ist. Über die Exzentrizität erfährt die Sicherheitseinheit eine Hubbewegung, wodurch die Sicherungslage und die Entsicherungslage erreicht werden können.

In einer weiteren Alternative der Erfindung weist das Sperrglied ein Kontaktelement auf, das am Kopfbereich angreift. Hierbei weist der Kopfbereich die Führungskontur auf, wobei das Kontaktelement während der Bewegung des Sperrgliedes in seine jeweilige Stellung entlang der Führungskontur des Kopfbereiches verfährt. Das Kontaktelement bildet vorzugsweise mit dem Sperrglied ein einheitliches Bauteil. Ausgehend von der Entriegelungsstellung des Sperrgliedes kontaktiert das Kontaktelement den Kopfbereich an seiner Führungskontur. Während des aktivierten Zustandes des Getriebes erfolgt eine Rotationsbewegung des Antriebsrades, wobei das Kontaktelement des Sperrgliedes entlang der Führungskontur des Kopfbereiches verfährt. Das Führungselement ist ebenfalls am Sperrglied angeordnet, ist jedoch mit der Führungskontur der Führungsgeometrie, insbesondere des Kopfbereiches nicht in Kontakt. Im Normalfall, das bedeutet, falls keine Fehlstellung der Lenksäule vorliegen sollte oder das Sperrglied ohne Probleme aus seiner Entriegelungsstellung in die Verriegelungsstellung verfährt, hat das Führungselement im Wesentlichen keine Funktion. Erst in einem Problemfall, das bedeutet, falls eine Fehlstellung der Lenksäule vorliegen sollte, kontaktiert das Führungselement die Führungsgeometrie, insbesondere das Führungsmittel des Antriebsrades, wodurch das Sperrglied formschlüssig in der Zwischenstellung gehalten wird, so dass eine Bewegung des Sperrgliedes in die Entriegelungsstellung wirksam blockiert ist. In einem derartigen Fall, ist das Kontaktelement des Sperrgliedes beabstandet zur Führungskontur des Kopfbereiches.

Ebenfalls ist es denkbar, dass das Kontaktelement vorsprungartig am Sperrglied ausgebildet ist, wobei das Sperrglied mit einem zum Kontaktelement beabstandeten Anschlagelement ausgeführt ist, wobei zwischen dem Kontaktelement und dem Anschlagelement ein Freiraum vorliegt, in den der Kopfbereich sich erstreckt. Hierbei kann das Anschlagelement zum Kopfbereich derart angeordnet sein, dass im Falle eines ungewollten Verbleibens des Sperrgliedes in der Entriegelungsstellung der Kopfbereich das Anschlagelement kurzzeitig kontaktiert, so dass eine Kraft zur Bewegung des Sperrgliedes in Richtung der Lenksäule ausgeübt wird. Da der Kopfbereich zwischen dem Anschlagelement und dem Kontaktelement des Sperrgliedes angeordnet ist, wird eine kompakte Gesamtbaueinheit geschaffen.

Vorteilhafterweise kann die Vorrichtung zur Ansteuerung des Sperrgliedes durch eine Steuerelektronik überwacht werden, die fahrzeugseitig angeordnet sein kann. Aus sicherheitstechnischen Gründen kann es vorteilhaft sein, wenn neben der Erfassung des Drehweges oder Drehwinkels des Antriebsrades auch bestimmte Positionen des Sperrgliedes oder der Sicherheitseinheit erfasst werden. Dieses kann beispielsweise durch Sensoren, insbesondere Magnetfeldsensoren, erfolgen, die das magnetische Feld eines auf dem Antriebsrad oder dem Sperrglied oder der Sicherheitseinheit angebrachten Permanentmagneten erfassen können. Der Sensor kann alternativ als Inkrementalgeber ausgeführt sein, der auch photoelektrisch oder magnetisch das Antriebsrad abtastet. Hierdurch kann eine elektronische Steuerung die Funktionsfähigkeit der mechanischen Kopplung zwischen dem Antriebsrad, dem Sperrglied und der Sicherheitseinheit überwachen sowie eine Manipulation erkennen.

Das Sperrglied kann aus einem Metall, insbesondere aus Stahl hergestellt sein. Die Materialdicke ist dabei so bemessen, dass weitestgehend eine Materialzerstörung ausgeschlossen werden kann. In einer alternativen Ausführungsform können das Sperrglied sowie Bauteile des Getriebes in Spritzgusstechnik hergestellt sein. Vorteilhafterweise ist das freie Ende des Sperrgliedes in seiner Kontur abgerundet und/oder angeschrägt ausgeführt, wodurch ein Einrasten des Sperrgliedes in eine Nut des funktionswesentlichen Bauteils erleichtert wird.

Zweckmäßigerweise ist ein Gehäuse vorgesehen, innerhalb dessen die wesentlichen Bauteile der erfindungsgemäßen Vorrichtung, wie Sperrglied, Getriebe, Sicherheitseinheit etc., angeordnet sind. Vorteilhafterweise weist das Gehäuse Aufnahmebereiche auf, in denen die genannten Bauteile aufgenommen sind, wodurch eine kompakte Bauform mit wenigen Bauteilen realisiert werden kann. In einer möglichen Ausführungsform der Erfindung weist das Gehäuse zumindest zwei Gehäuseschalen auf, innerhalb dieser die Getriebebauteile, das Sperrglied und die Sicherheitseinheit angeordnet sind.

Die erfindungsgemäße Vorrichtung kann als elektrische Lenkungsverriegelung für Fahrzeuge zum Einsatz kommen, wobei die Vorrichtung zudem problemlos mit insbesondere so genannten "Keyless-Entry-Systemen" kombinierbar ist. Die erfindungsgemäße Vorrichtung kann von außen, beispielsweise per Funksignal oder nach einem stattgefundenen Datenaustausch, aktiviert werden. Dabei ermöglicht die Erfindung selbstverständlich eine Rückmeldung dahingehend, ob die betreffende Vorrichtung zuverlässig das funktionswesentliche Bauteil, insbesondere die Lenksäule oder den Gangschalthebel des Kraftfahrzeugs, blockiert oder nicht. Dies kann zum Beispiel durch eine optische oder akustische Meldevorrichtung innerhalb des Kraftfahrzeugs dargestellt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine erfindungsgemäße Vorrichtung zur Ansteuerung eines Sperrgliedes einer Lenksäule in einer Explosionsdarstellung,
- Figur 2: eine Schnittansicht gemäß Schnittlinie II-II aus Figur 1,
- Figur 3: eine Draufsicht auf das Antriebsrad der erfindungsgemäßen Vorrichtung gemäß Figur 1,
- Figur 4: eine Schnittansicht gemäß Schnittlinie IV-IV aus Figur 3,
- Figur 5A: die erfindungsgemäße Vorrichtung gemäß Figur 1, wobei das Sperrglied sich in der Entriegelungsstellung befindet,
- Figur 5B: die Vorrichtung gemäß Figur 1, wobei das Sperrglied die Entriegelungsstellung in Richtung Verriegelungsstellung verlassen hat,
- Figur 5C: die Vorrichtung gemäß Figur 1, wobei das Sperrglied sich in der Verriegelungsstellung befindet,
- Figur 5D: die Vorrichtung gemäß Figur 1, wobei das Sperrglied sich in der ZwischenStellung befindet,
- Figur 6: eine weitere Alternative der erfindungsgemäßen Vorrichtung gemäß Figur 1, wobei eine Sicherheitseinheit am Sperrglied vorgesehen ist,
- Figur 7: eine weitere Ansicht der Vorrichtung gemäß Figur 6, wobei die Sicherheitseinheit sich in der Sicherungslage befindet,
- Figur 8: die Vorrichtung gemäß Figur 6, wobei die Sicherheitseinheit in der Entsicherungslage sich befindet,
- Figur 9A: eine weitere Alternative der erfindungsgemäßen Vorrichtung, wobei das Sperrglied sich in der Entriegelungsstellung befindet,
- Figur 9B: die Vorrichtung gemäß Figur 9A, wobei das Sperrglied sich in der Verriegelungsstellung befindet,
- Figur 9C: die Vorrichtung gemäß Figur 9A, wobei das Sperrglied sich in der Verriegelungsstellung befindet,
- Figur 9D: die Vorrichtung gemäß Figur 9A, wobei das Sperrglied sich in der Zwischenstellung befindet,
- Figur 10: eine weitere Ansicht der Vorrichtung gemäß Figur 9A bis Figur 9D und
- Figur 11: eine Seitenansicht des Sperrgliedes gemäß der Vorrichtung aus Figur 9A bis Figur 9D.

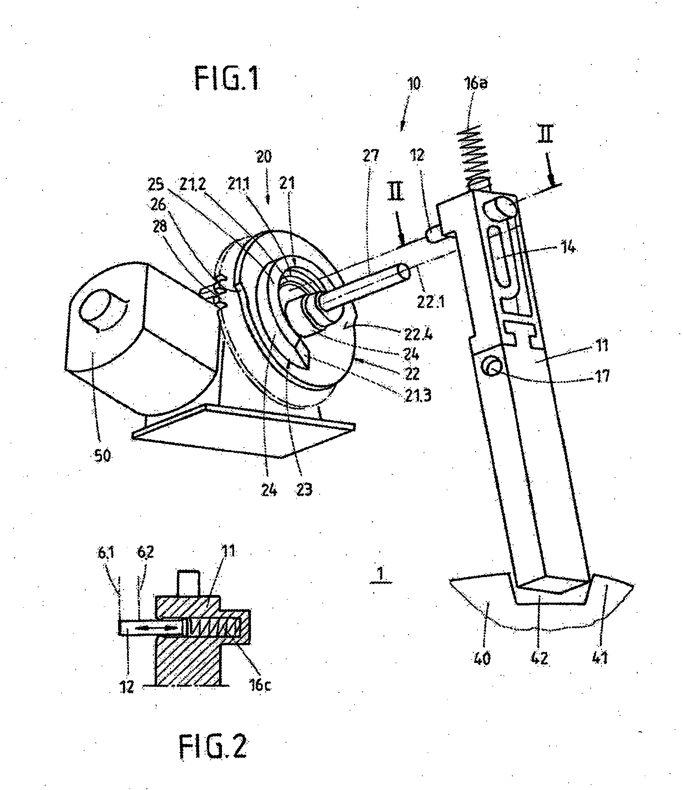

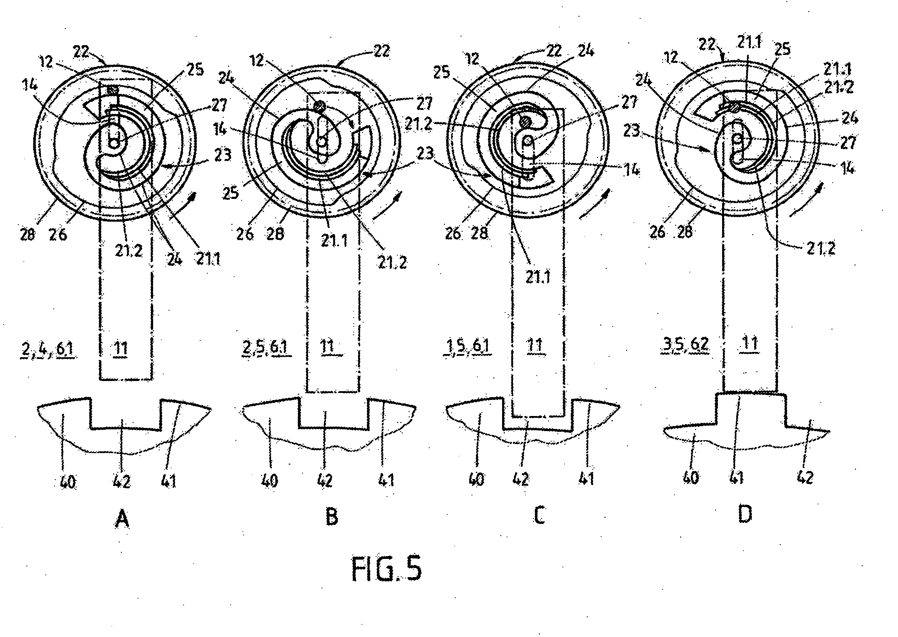

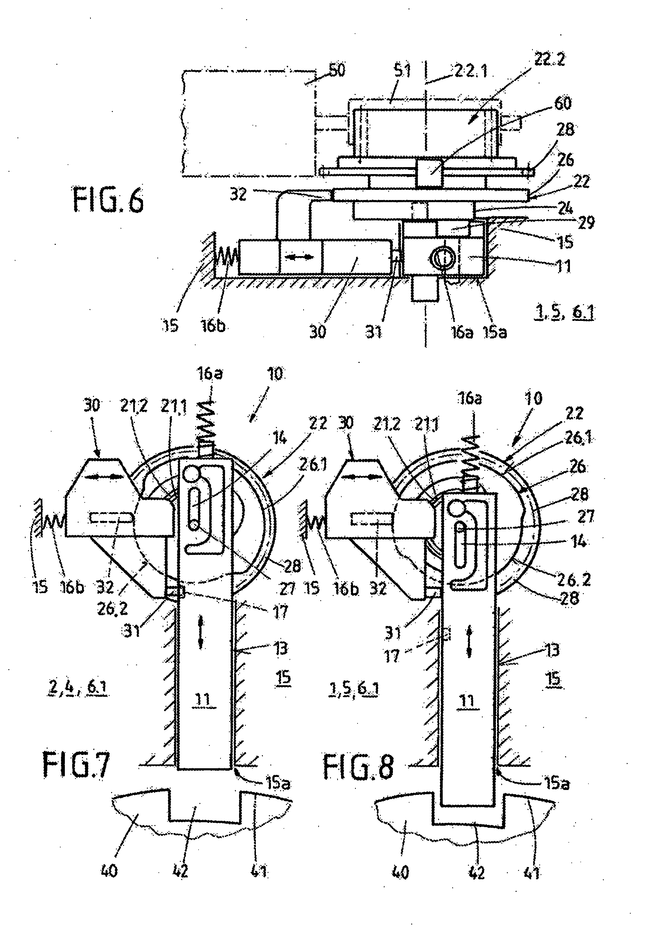

Die folgende Figurenbeschreibung zeigt rein schematisch eine mögliche Ausführungsform einer Vorrichtung 10 zur Steuerung eines Sperrgliedes 11 eines funktionswesentlichen Bauteils 40. Bei dem Bauteil 40 handelt es sich um eine Lenksäule 40 eines Kraftfahrzeugs. Die Vorrichtung 10 weist ein Getriebe 20 auf, das mit dem Sperrglied 11 in mechanischer Wirkverbindung steht, wobei das Sperrglied 11 in Figur 1 sich in einer Verriegelungsstellung 1 befindet. Über das Getriebe 20 ist das Sperrglied 11 aus der Verriegelungsstellung 1 in eine Entriegelungsstellung 2 und umgekehrt bewegbar. In der Verriegelungsstellung 1 ragt das Sperrglied 11 mit seinem freien Ende in eine Nut 42 der Lenksäule 40 ein. Hierdurch wird die Lenksäule 40 gesperrt. Im Gegensatz dazu ist das Sperrglied 11 in der Entriegelungsstellung 2, wie sie beispielsweise in Figur 5A und Figur 7 dargestellt ist, losgelöst von der Lenksäule 40.

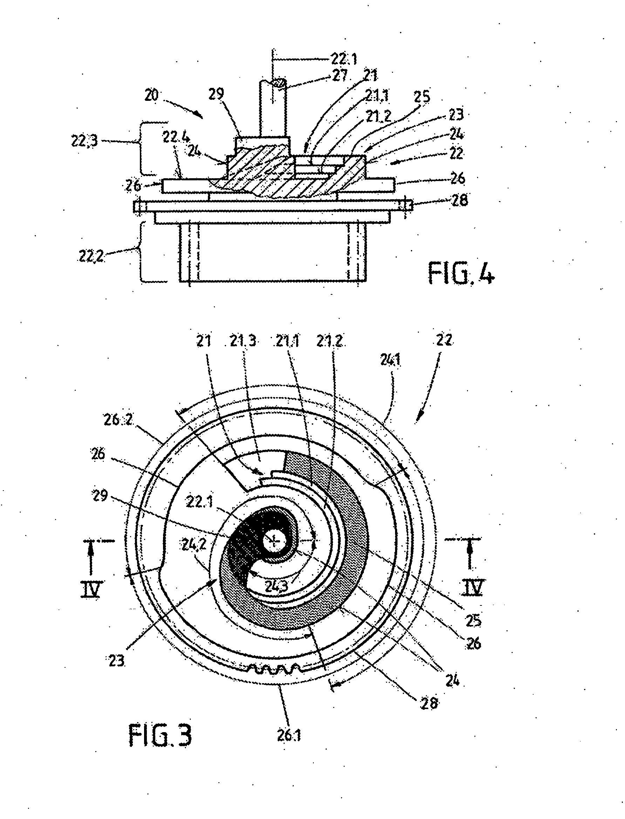

Das Getriebe 20 weist ein Antriebsrad 22 auf, das um eine Drehachse 22.1 gelagert ist. Das Antriebsrad 22 weist gemäß Figur 4 eine Antriebsseite 22.2 und eine Abtriebsseite 22.3 auf. Hierbei greift ein in Figur 1 dargestellter elektrischer Motor 50 an der Antriebsseite 22.2 an. Die Antriebsseite 22.2 ist im dargestellten Ausführungsbeispiel als Schneckenwelle ausgeführt, die durch ein Schneckenrad 51 des elektrischen Motors 50 angetrieben wird, welches in Figur 6 schematisch angedeutet ist. Hierdurch können hohe Drehmomente auf der Abtriebsseite 22.3 des Antriebsrades 22 übertragen werden. Ein weiterer Vorteil ist, dass abtriebsseitig das Getriebe 20 selbsthemmend ausgeführt ist.

Wie Figur 3 verdeutlicht, weist das Antriebsrad 22 eine Führungsgeometrie 23 auf, die bogenförmig ausgeführt ist. Die Führungsgeometrie 23 wirkt mit einem Führungselement 12 des Sperrgliedes 11 zusammen, welches in Figur 1 gezeigt ist. Das Führungselement 12 ist am Sperrglied 11 beweglich gelagert, wobei das Führungselement 12 federbelastet am Sperrglied 11 angeordnet ist, welches in Figur 2 gezeigt ist. Entsprechend der Drehlage des Antriebsrades 22 ist das Führungselement 12 aus einer Ausgangslage 6.1 in eine weitere Lage 6.2 in das Sperrglied 11 bewegbar. Hierbei weist das Sperrglied 11 eine einseitig offene Bohrung auf, innerhalb dieser ein Federelement 16c angeordnet ist, das eine Kraft auf das Führungselement 12 ausübt, das zumindest teilweise innerhalb der Bohrung translatorisch beweglich angeordnet ist.

Wie Figur 1 verdeutlicht, weist die Führungsgeometrie 23 eine dreidimensionale Gestalt am Antriebsrad 22 auf, die in Richtung des Sperrgliedes 11 vorsprungartig aus dem Antriebsrad 22 herausragt. Während das Antriebsrad 22 über den Motor 50 angetrieben wird, verfährt das Führungselement 12 entlang der Führungsgeometrie 23, wodurch eine Bewegung des Sperrgliedes 11 in seine jeweilige Stellung 1, 2 ausgelöst wird. Die Führungsgeometrie 23 ist hierbei mit einer Führungskontur 24 ausgeführt, entlang dieser das Führungselement 12 während der Bewegung des Sperrgliedes 11 aus der Verriegelungsstellung 1 in die Entriegelungsstellung 2 und umgekehrt kontaktierend entlangfährt. Die Führungskontur 24 ist gemäß Figur 3 mit einem ersten Segment 24.1 und einem zweiten Segment 24.2 ausgeführt. Das erste Segment 24.1 weist einen konstanten Radius zur Drehachse 22.1 auf. Das zweite Segment 24.2 weist einen spiralförmigen Verlauf auf. Ausgehend vom ersten Segment 24.1 nimmt der Radius zur Drehachse 22.1 entlang des zweiten Segmentes 24.2 ab. Ferner ist die Führungskontur 24 im dargestellten Ausführungsbeispiel mit einem dritten Segment 24.3 ausgeführt, das sich dem zweiten Segment 24.2 anschließt. Das dritte Segment 24.3 weist wiederum einen konstanten Radius zur Drehachse 22.1 auf.

Über die soeben beschriebene Gestaltung der Führungskontur 24 kann ein Freilauf des Getriebes 20 erzielt werden. Ausgehend von der Entriegelungsstellung 2 aus Figur 5A gleitet das Führungselement 12 zunächst entlang des ersten Segmentes 24.1 der Führungskontur 24, während das Antriebsrad 22 gegen den Uhrzeigersinn sich bewegt. Während das Führungselement 12 entlang des ersten Segmentes 24.1 kontaktierend anliegt, verbleibt das Sperrglied 11 unverändert in seiner Entriegelungsstellung 2, welches einen Vorlauf des Getriebes 20 darstellt. Erst wenn das Führungselement 12 in das zweite Segment 24.2 der Führungskontur 24 eintritt, erfolgt eine Bewegung des Führungselementes 12 in Richtung der Drehachse 22.1, wodurch eine Linearbewegung des Sperrgliedes 11 in Richtung der Lenksäule 40 bewirkt wird, welches in Figur 5B dargestellt ist. Das Antriebsrad 22 weist in der dargestellten Ausführungsform einen Stift 27 auf, durch den die Drehachse 22.1 verläuft. Der Stift 27 greift in eine Ausnehmung 14 des Sperrgliedes 11 ein. Während das Sperrglied 11 ausgehend von seiner Stellung aus Figur 5A sich in Richtung der Verriegelungsstellung 1 bewegt, die in Figur 5C dargestellt ist, verfährt der Stift 27 entlang der Ausnehmung 14 des Sperrgliedes 11.

Wie in Figur 6 bis Figur 8 angedeutet ist, ist das Getriebe 20 sowie das Sperrglied 11 innerhalb eines Gehäuses 15 angeordnet, wobei das Gehäuse 15 eine Öffnung 15a aufweist, durch die das Sperrglied 11 zumindest in der Verriegelungsstellung 1 gemäß Figur 8 hindurchragt. Damit das Führungselement 12 zuverlässig an der Führungskontur 24 anliegt, ist ein erstes Federelement 16a vorgesehen, das mit einer Federkraft auf das Sperrglied 11 wirkt, die zur Öffnung 15a gerichtet ist. Im vorliegenden Ausführungsbeispiel ist das erste Federelement 16a eine Druckfeder.

Ausgehend von Figur 5B erfolgt der Verriegelungsprozess dahingehend, dass das Führungselement 12 weiter an der Führungskontur 24 entlangfährt, bis es in den Bereich der Führungskontur 24 gemäß Figur 5C gelangt. So wird die Verriegelungsstellung 1 in Figur 5C erreicht, bei der das freie Ende des Sperrgliedes 11 in die Nut 42 der Lenksäule 40 eingreift. Eine Bewegung des Sperrgliedes 11 ausgehend von der Verriegelungsstellung 1 gemäß Figur 5C in die Entriegelungsstellung 2 gemäß Figur 5A wird dadurch realisiert, dass die Drehrichtung des Antriebsrades 2 gewechselt wird, das bedeutet, dass das Antriebsrad 22 im Uhrzeigersinn eine Drehung erfährt.

Es kann nun der Fall eintreten, dass die Lenksäule 40 eine Fehlstellung einnimmt, bei der beispielsweise der Zahn 41 im Bereich der Gehäuseöffnung 15a sich befindet, so dass eine Verriegelungsstellung 1 des Sperrgliedes 11 nicht bewirkt werden kann (siehe Figur 5D). In diesem Fall ist das Getriebe derart ausgeführt, dass das Sperrglied 11 eine Zwischenstellung 3 einnimmt, die zwischen der Verriegelungsstellung 1 und der Entriegelungsstellung 2 liegt. Hierbei weist das Getriebe 20 Führungsmittel 21 auf, die formschlüssig das Sperrglied 11 in der Zwischenstellung 3 halten, so dass eine Bewegung des Sperrgliedes 11 zurück in die Entriegelungsstellung 2 verhindert wird (siehe Figur 5D). In der dargestellten Ausführungsform gemäß Figur 3 und 4 weist das Führungsmittel 21 zwei bogenförmig verlaufende Führungswege 21.1,21.2 auf, die durch eine gemeinsame Wandung 25 zur außenliegenden Führungskontur 24 beabstandet sind. Die Führungswege 21.1, 21.2 sind treppenartig an der Führungsgeometrie 23 ausgeführt, wobei der Führungsweg 21.1 eine höhere Lage aufweist als der Führungsweg 21.2. Beide Führungswege 21.1, 21.2 liegen auf einer höheren Ebene als die Oberfläche 22.4, auf der das Führungselement 12 anliegend an der Führungskontur 24 von der Entriegelungsstellung 2 gemäß Figur 5A in die Verriegelungsstellung 1 gemäß Figur 5C verfährt.

Befindet sich nun die Lenksäule 40 in einer Fehlstellung, bewegt sich zunächst das Sperrglied 11 ausgehend von Figur 5A um einen bestimmten Betrag in Richtung Verriegelungsstellung 1 und gelangt ungefähr zur Position gemäß Figur 5B. In der Stellung des Sperrgliedes 11 aus Figur 5B trifft das freie Ende des Sperrgliedes 11 auf den Zahn 41 der Lenksäule 40, welches exemplarisch nicht gezeigt ist. Eine weitere Bewegung des Sperrgliedes 11 nach unten bei einer Fehlstellung der Lenksäule 40 ist nicht möglich. Da sich das Antriebsrad 22 weiter gegen den Uhrzeigersinn um die Drehachse 22.1 bewegt, hebt gemäß Figur 5B das Führungselement 12 sich von der Führungskontur 24 ab und bewegt sich gemäß des in Figur 5B gezeigten Pfeiles in den Bereich der Führungswege 21.1, 21.2. Je nach Position des Sperrgliedes 11, den dieser in der Fehlstellung der Lenksäule 40 einnimmt, gelangt das Führungselement 12 auf den ersten oder den zweiten Führungsweg 21.1, 21.2., welches in Figur 5D gezeigt ist. In der Fehlstellung der Lenksäule 40 bewegt sich das Antriebsrad 22 weiter gegen den Uhrzeigersinn, wobei das Führungselement 12 entlang eines Führungsweges 21.1,21.2 entlangfährt. Während das Führungselement 12 an einem der Führungswege 21.1, 21.2 sich befindet, wird das Führungselement 12 um einen bestimmten Weg in Richtung des Sperrgliedes 11 gedrückt und nimmt die Lage 6.2 gemäß Figur 2 ein. Da das Führungselement 12 federbelastet und parallel zur Drehachse 22.1 beweglich am Sperrglied 11 angeordnet ist, rastet das Führungselement 12 bei einer Fehlstellung der Lenksäule 40 entsprechend in das Führungsmittel 21 ein, das formschlüssig das Sperrglied 11 in dieser Zwischenstellung gemäß Figur 5D hält, so dass lediglich eine Bewegung des Sperrgliedes 11 in Richtung der Verriegelungsstellung 1 möglich ist, falls beispielsweise der Benutzer manuell eine entsprechende Bewegung der Lenksäule 40 zur Aufhebung der Fehlstellung ausführt. In diesem Fall bewirkt die auf das Sperrglied 11 wirkende Kraft ausgehend vom Federelement 16a gemäß Figur 7 und Figur 8, dass das Führungselement 12 den Kontakt zum Führungsmittel 21 verliert und zur Führungskontur 24 in Richtung der Drehachse 22.1 geführt wird.

Falls im Falle der Fehlstellung der Lenksäule 40 das Sperrglied 11 nur geringfügig in Richtung der Verriegelungsstellung 1 eine Bewegung erfährt, kann das Führungselement 12 entlang der Rampe 21.3 auf die Wandung 25 gelangen. Der Normalfall ist jedoch, dass das Führungselement 12 bei einer Fehlstellung der Lenksäule 40 zumindest teilweise aus der Öffnung 15a austritt und somit von dem Haltemittel 21 erfasst wird.

In einer weiteren Möglichkeit der Erfindung, die in Figur 6 bis Figur 8 dargestellt ist, steht eine Sicherheitseinheit 30 mit dem Antriebsrad 22 in Wirkverbindung. Die Sicherheitseinheit 30 ist federbelastet, relativ zum Sperrglied 11 verschiebbar am Gehäuse 15 gelagert. Gemäß Figur 7 nimmt die Sicherheitseinheit 30 eine Sicherungslage 4 ein, bei der die Sicherheitseinheit 30 mit ihrem Blockierelement 31 in eine Ausnehmung 17 des Sperrgliedes 11 eingreift. Hierdurch wird verhindert, dass das Sperrglied 11 aus seiner Entriegelungsstellung 2 ungewollt in die Verriegelungsstellung 1 sich bewegt. In Figur 8 ist die Entsicherungslage 5 der Sicherheitseinheit 30 gezeigt, bei das Blockierelement 31 außerhalb der Ausnehmung 17 des Sperrgliedes 11 sich befindet. Gemäß dem Ausführungsbeispiel wird die Sicherheitseinheit 30 über eine Steuerkurve 26 des Antriebsrades 22 translatorisch bewegt. Die Steuerkurve 26 ist exzentrisch am Antriebsrad 22 angeordnet, welches ebenfalls in Figur 3 verdeutlicht ist. Die Steuerkurve 26 ist mit einem ersten Bereich 26.1 und einem zweiten Bereich 26.2 ausgeführt, wobei der erste Bereich 26.1 einen größeren Radius zur Drehachse 22.1 aufweist als der zweite Bereich 26.2. Während das Antriebsrad 22 um die Drehachse 22.1 bewegt wird, gleitet ein an der Sicherheitseinheit 30 angeordneter Arm 32 entlang des Randbereiches der Steuerkurve 26 ab, wobei über die genannte Steuerkurve 26 eine Hubbewegung der Sicherheitseinheit 30, im vorliegenden Fall senkrecht zur Bewegungsrichtung des Sperrgliedes 11, ausgelöst wird. Gemäß Figur 7 liegt der Arm 32 am zweiten Bereich 26.2 der Steuerkurve 26 an. Erfolgt eine entsprechende Bewegung des Antriebsrades 22 zur Bewegung des Sperrgliedes 11 in die Verriegelungsstellung 1 gemäß Figur 8, gelangt der Arm 32 nach einem entsprechenden Drehwinkel des Antriebsrades 22 an den ersten Bereich 26.1 der Steuerkurve 26, der die Sicherheitseinheit 30 sowie das Blockierelement 31 nach links verschiebt, so dass die Sicherheitseinheit 30 ihre Entsicherungslage 5 erreicht.

Zur Ermittlung der jeweiligen Position des Antriebsrades 22 ist das Antriebsrad 22 am Randbereich 28 gitterartig ausgeführt. Wie in Figur 6 zu erkennen ist, wirkt dieser Randbereich 28, der einer Verzahnung ähnelt, mit einer Sensoreinheit 60 zusammen, wodurch eine photoelektrische Ermittlung der genauen Position, Geschwindigkeit etc. des Antriebsrades 22 erzielbar ist. Alternativ kann eine Positionsermittlung über Magnetfeldsensoren erfolgen.

Das Sperrglied 11 kann aus einem einheitlichen Bauteil bestehen, welches in Figur 7 und Figur 8 exemplarisch gezeigt ist. Selbstverständlich ist es aus Montagegründen möglich, das Sperrglied 11 beispielsweise zweiteilig auszuführen, welches in Figur 1 dargestellt ist. Der untere Bereich des Sperrgliedes 11, der mit seinem freien Ende in die Lenksäule 40 hineinragt, ist mit einem Kopfbereich ausgeführt, der über eine form- und/oder kraftschlüssige Verbindung mit dem unteren Bereich des Sperrgliedes 11 verbunden ist.

In Figur 6 ist die Sicherheitseinheit 30 in der Entsicherungslage 5 dargestellt, bei der das Blockierelement 31 nicht im Eingriff mit dem Sperrglied 11 ist. Das Sperrglied 11 befindet sich in der Verriegelungsstellung 1, wobei das Führungselement 12 die Ausgangslage 6.1 einnimmt. Wie zu erkennen ist, ist die Sicherheitseinheit 30 translatorisch, senkrecht zur Drehachse 22.1 im Gehäuse 15 beweglich gelagert. Des Weiteren weist das Antriebsrad 22 an seinem oberen Bereich einen Kopfbereich 29 auf, der in der Verriegelungsstellung 1 sowie in der Entriegelungsstellung 2 gegen das Sperrglied 11 anschlägt und somit eine weitere Drehung des Antriebsrades 22 zusätzlich verhindert. Befindet sich das Sperrglied 11 in der Verriegelungsstellung 1, sorgen das Führungsmittel 21, insbesondere die Führungswege 21.1 und 21.2 dafür, dass eine ungewollte Bewegung des Sperrgliedes 11 in Richtung der Entriegelungsstellung 2 ausgeschlossen ist. Da die Führungswege 21.1 und 21.2 stufenartig nach oben verlaufen, kann das Führungselement 12 ausgehend von der Verriegelungsstellung aus Figur 5C nicht in Richtung der Entriegelungsstellung (nach oben) bewegt werden. In diesem Fall würde das Führungselement 12 gegen die Führungsmittel 21 treffen und innerhalb der schneckenartigen Führungsgeometrie 25 verbleiben.

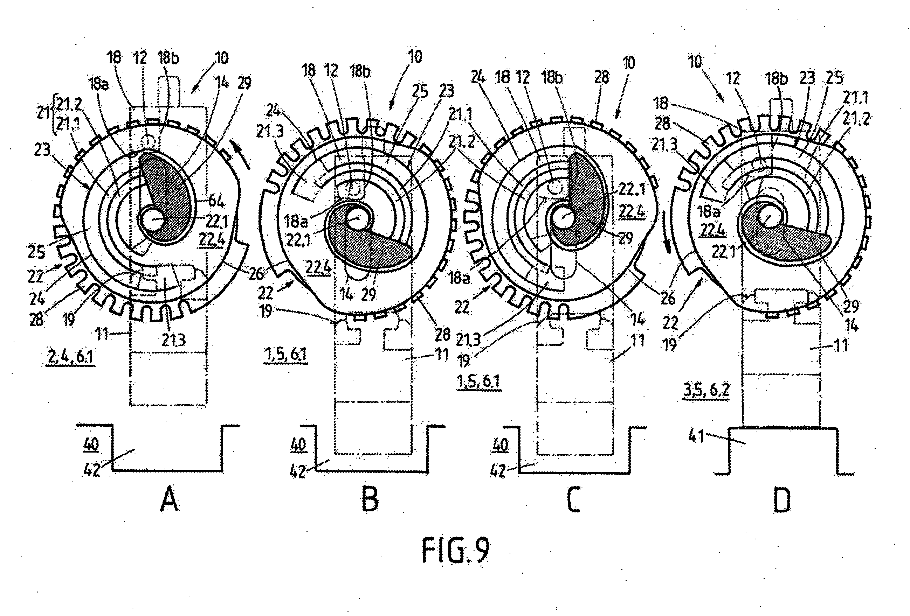

Die Figuren 9 bis 11 zeigen eine weitere Modifikation der erfindungsgemäßen Vorrichtung 10, die im Wesentlichen dem Ausführungsbeispiel gemäß Figur 1 bis Figur 8 entspricht. Hierbei wird die Vorrichtung 10 durch das identische Getriebe 20 angetrieben, welches in Figur 1 dargestellt ist. Das bedeutet, dass unter anderem die Merkmale und Ausführungsformen des Antriebsrades 22, wie sie beispielsweise in Figur 1, Figur 3 und Figur 4 offenbart sind, in Figur 9 bis Figur 11 zum Einsatz kommen, worauf - um Wiederholungen zu vermeiden - nicht explizit eingegangen wird.

Die in den Figuren 9 bis 11 dargestellte Vorrichtung 10 arbeitet mit einer nicht explizit dargestellten Sicherheitseinheit zusammen, die an der Steuerkurve 26 des Antriebsrades 22 angreift. Die Funktionsweise der Sicherheitseinheit entspricht im Wesentlichen der Funktionsbeschreibung gemäß Figur 6 bis Figur 8. Der wesentliche Unterschied zum Ausführungsbeispiel gemäß Figur 5A bis Figur 5D ist, dass bei der Vorrichtung gemäß Figur 9A bis Figur 9D an Stelle des Führungselementes 12 nun ein Kontaktelement 18 des Sperrgliedes 11 an der Führungsgeometrie 23 unmittelbar anliegt, wobei durch eine entsprechende Bewegung des Antriebsrades 22 das Kontaktelement 18 entlang der Führungsgeometrie 23 verfährt und somit eine Bewegung des Sperrgliedes 11 in seine jeweilige Stellung 1, 2 erfolgt.

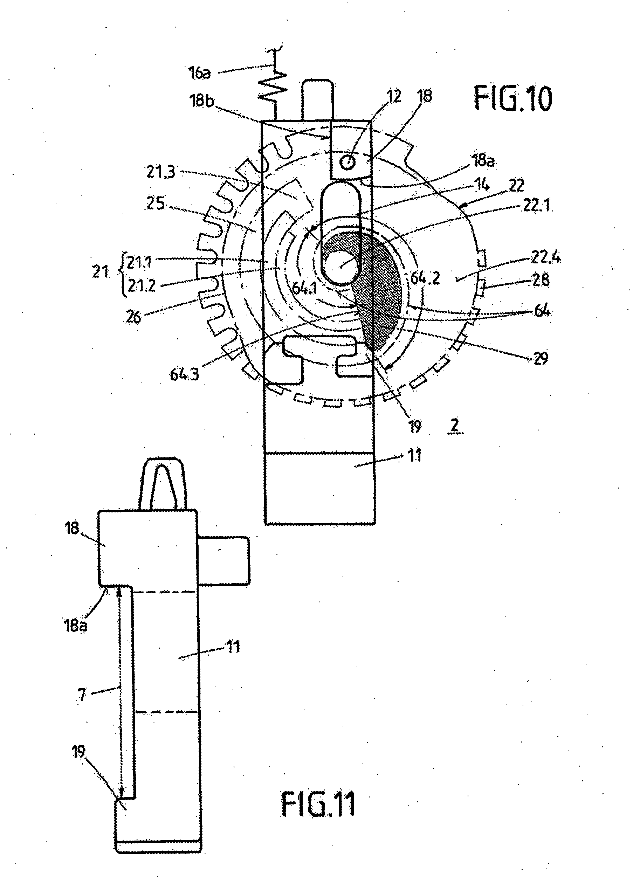

Wie in Figur 11 dargestellt ist, weist das Sperrglied 11 das Kontaktelement 18 auf, welches vorsprungartig ausgebildet ist. Des Weiteren ist zum Kontaktelement 18 beabstandet ein Anschlagelement 19 ausgebildet, wobei zwischen dem Kontaktelement 18 und dem vorsprungartigen Anschlagelement 19 ein Freiraum 7 vorliegt, innerhalb dessen sich der Kopfbereich 29 rotierend bewegen kann. Ausgehend von der Entriegelungsstellung 2 gemäß Figur 9A erfolgt durch eine Aktivierung des Getriebes 20 aus Figur 1 eine entsprechende Rotation des Antriebsrades 22 gegen den Uhrzeigersinn. Der Kopfbereich 29 ist mit einer Führungskontur 64 ausgeführt, die sich in ein erstes Segment 64.1 und eine zweites Segment 64.2 unterteilt. Das erste Segment 64.1 weist einen konstanten Radius zur Drehachse 22.1 auf. Das zweite Segment 64.2 weist einen spiralförmigen Verlauf auf. Während sich nun das Antriebsrad 22 gegen den Uhrzeigersinn um die Drehachse 22.1 bewegt, verfährt das Kontaktelement 18 mit seiner Kontaktfläche 18a entlang der Führungskontur 64 des Kopfbereiches 29. Während die Kontaktfläche 18a entlang des zweiten Segmentes 64.1 verfährt, nimmt der Abstand zwischen der Kontaktfläche 18a und der Drehachse 22.1 ab, so dass das Sperrglied 11 translatorisch in Richtung Verriegelungsstellung 1 bewegt wird. Wie in Figur 1 dargestellt, wirkt ein Federelement auf das Sperrglied 11, wodurch das Kontaktelement 18 stets an der Führungskontur 64 anliegt.

Während der Bewegung des Sperrgliedes 11 aus seiner Entriegelungsstellung 2 gemäß Figur 9A in seine Verriegelungsstellung 2 weist das Führungselement 12 einen Abstand zur Führungsgeometrie 23, insbesondere zur Führungskontur 24, 64, auf. Hierbei ist das Führungselement 12 wie in Figur 2 dargestellt, über ein Federelement federbelastet, so dass das Führungselement 12 mit seinem freien Ende entlang der Oberfläche 22.4 des Antriebsrades 22 entlangfährt und schließlich die Position gemäß Figur 9B erreicht. Durch eine weitere Drehung des Antriebsrades 22 gegen den Uhrzeigersinn verfährt die Kontaktfläche 18a am ersten Segment 64.2 der Führungskontur 64, wobei das Sperrglied 11 in seiner Verriegelungsstellung 1 verbleibt. Wie auch gemäß Figur 5A bis 5D weist das Sperrglied 11 gemäß Figur 9A bis Figur 9D eine Ausnehmung 14 als Langloch auf, innerhalb dieser Aufnehmung 14 der Stift 27 des Antriebsrades 22 sich entsprechend bewegt. Die Bewegung des Antriebsrades 22 ausgehend von Figur 9B bis zu seiner Position gemäß Figur 9C dient als Getriebefreilauf. In der in Figur 9C dargestellten Endstellung des Antriebsrades 22 erfolgt eine Kontaktierung des Kopfbereiches 29 mit dem Kontaktelement 18. Hierbei weist das Kontaktelement 18 eine Anschlagfläche 18b auf, wobei die Führungskontur 64 des Kopfbereiches 29 eine neutrale Seite 64.3 aufweist. In einer möglichen Endstellung des Antriebsrades 22 berühren sich die neutrale Seite 64.3 der Führungskontur 64 und die Anschlagfläche 18b des Kontaktelementes 18.

Es kann nun, wie in Figur 5D beschrieben, der Fall eintreten, dass die Lenksäule 40 eine Fehlstellung einnimmt, bei der beispielsweise der Zahn 41 im Bereich der Gehäuseöffnung 15A gemäß Figur 7 oder Figur 8 sich befindet, so dass eine Verriegelungsstellung 1 des Sperrgliedes 11 nicht bewirkt werden kann (siehe Figur 9D). In diesem Fall ist das Getriebe derart ausgeführt, dass das Sperrglied 11 eine Zwischenstellung 3 einnimmt, die zwischen der Verriegelungsstellung 1 und der Entriegelungsstellung 2 liegt. Hierbei weist das Getriebe die bereits in Figur 1 bis Figur 8 beschriebenen Führungsmittel 21 am Antriebsrad 22 auf, die formschlüssig das Sperrglied 11 in der Zwischenstellung 3 halten, so dass eine Bewegung des Sperrgliedes 11 zurück in die Entriegelungsstellung 2 verhindert wird. Die Geometrie der Führungsmittel 21 entspricht den Ausführungen gemäß Figur 1 bis Figur 8.

Befindet sich nun die Lenksäule 40 in einer Fehlstellung, bewegt sich zunächst das Sperrglied 11 ausgehend von Figur 9A um einen bestimmten Betrag in Richtung Verriegelungsstellung 1 und gelangt ungefähr zur Position gemäß Figur 9D. In dieser Stellung des Sperrgliedes 11 trifft das freie Ende des Sperrgliedes 11 auf den Zahn 41 der Lenksäule 40, bei der eine weitere Bewegung des Sperrgliedes 11 nach unten nicht möglich ist. Da sich das Antriebsrad 22 weiter gegen den Uhrzeigersinn um die Drehachse 22.1 bewegt, hebt gemäß Figur 9B das Kontaktelement 18 sich von der Führungskontur 64 des Kopfbereiches 29 ab, wobei nun das Führungselement 12 zum Einsatz kommt. Das Führungselement 12 gelangt in den Bereich des Führungsmittels 21, das bedeutet, dass je nach Position des Sperrgliedes 11, das Führungselement 12 auf die Wandung 25 oder in einen der beiden Führungswege 21.1, 21.2 gelangen kann. Im vorliegenden Ausführungsbeispiel befindet sich das Führungselement 12 im Führungsweg 21.1. Da das Führungselement 12 federbelastet und parallel zur Drehachse 22.1 beweglich am Sperrglied 11 angeordnet ist, rastet das Führungselement 12 bei einer Fehlstellung der Lenksäule 40 entsprechend in das Führungsmittel 21, insbesondere in den Führungsweg 21.1, ein, der formschlüssig das Sperrglied 11 in dieser Zwischenstellung 3 gemäß Figur 9D hält, so dass lediglich eine Bewegung des Sperrgliedes 11 in Richtung der Verriegelungsstellung 1 möglich ist, falls beispielsweise der Benutzer manuell eine entsprechende Bewegung der Lenksäule 40 zur Aufhebung der Fehlstellung ausführt. In einem derartigen Fall bewirkt die auf das Sperrglied 11 wirkende Kraft ausgehend vom nicht explizit dargestellten Federelement (s. Figur 7 und Figur 8), dass das Führungselement 12 den Kontakt zum Führungsmittel 21 verliert und zur Führungskontur 24, 64 in Richtung der Drehachse 22.1 geführt und bewegt wird.

Falls ausgehend von Figur 9A etwaig der Fall eintreten sollte, dass zur Bewegung des Sperrgliedes 11 in die Verriegelungsstellung 1 das Sperrglied 11 ungewollt in der Entriegelungsstellung 2 trotz aktiviertem Getriebe verbleiben sollte, erfolgt nach einem definierten Drehwinkel des Antriebsrades 22 eine Kontaktierung des Kopfbereiches 29 mit dem Anschlagelement 19 des Sperrgliedes 11, welches in Figur 10 dargestellt ist. Die Figur 10 ist hierbei eine Draufsicht-Darstellung auf das Sperrglied 11, wobei Figur 9A bis 9D eine Draufsicht-Darstellung auf das Antriebsrad 22 ist. Aus diesem Grunde ist die Figur 10 spiegelverkehrt zu den Figuren 9A-9D.

Erfolgt nun eine Kontaktierung des Kopfbereiches 29 mit dem Anschlagelement 19, wird kurzzeitig über das Antriebsrad 22 eine Kraft zur Bewegung des Sperrgliedes 11 in Richtung der Lenksäule 40 ausgeübt. Kann hierdurch das Sperrglied 11 aus seiner Entriegelungsstellung 2 gelöst werden, verläuft das Führungselement 12 über die Rampe 21.3 auf die Wandung 25, wobei das Sperrglied 11 aufgrund des Federelementes 16a in Richtung Lenksäule 40 gedrückt wird, wodurch das Führungselement 12 den Kontakt zur Wandung 25 verliert und über die treppenartigen Führungswege 21.1, 21.2 in Richtung Drehachse 22.1 sich "rutschend" bewegt. Anschließend wird die Position gemäß Figur 9C erreicht.

Die Sicherheitseinheit gemäß Figur 6 bis Figur 8 ist derart an der Vorrichtung 10 gemäß Figur 9 bis Figur 11 vorgesehen, dass in der Entriegelungsstellung 1 gemäß Figur 9A die Sicherheitseinheit eine Sicherungslage 4 einnimmt, wie sie in Figur 7 beschrieben ist. In Figur 9B bis Figur 9D nimmt die Sicherheitseinheit eine Entsicherungslage 5 ein, wie sie in Figur 8 beschrieben ist.

### Bezugszeichenliste

- 1: Verriegelungsstellung
- 2: Entriegelungsstellung
- 3: Zwischenstellung
- 4: Sicherungslage
- 5: Entsicherungslage
- 6.1: Ausgangslage
- 6.2: weitere Lage
- 7: Freiraum
- 10: Vorrichtung
- 11: Sperrglied
- 12: Führungselement
- 13: Führung
- 14: Ausnehmung (des Sperrgliedes 11)
- 15: Gehäuse
- 15a: Öffnung (des Gehäuses 15)
- 16a: erstes Federelement
- 16b: zweites Federelement
- 16c: drittes Federelement
- 17: weitere Ausnehmung (des Sperrgliedes 11)
- 18: Kontaktelement
- 18a: Kontaktfläche
- 18b: Anschlagfläche
- 19: Anschlagelement
- 20: Getriebe
- 21: Führungsmittel
- 21.1: Führungsweg
- 21.2: Führungsweg
- 21.3: Rampe
- 22: Antriebsrad
- 22.1: Drehachse
- 22.2: Antriebsseite, Verzahnung
- 22.3: Abtriebsseite
- 22.4: Oberfläche
- 23: Führungsgeometrie
- 24: Führungskontur
- 24.1: erstes Segment
- 24.2: zweites Segment
- 24.3: drittes Segment
- 25: Wandung
- 26: Steuerkurve
- 26.1: erster Bereich der Steuerkurve 26
- 26.2: zweiter Bereich der Steuerkurve 26
- 27: Stift
- 28: Randbereich
- 29: Kopfbereich
- 30: Sicherheitseinheit
- 31: Blockierelement
- 32: Arm
- 40: Lenksäule
- 41: Zahn
- 42: Nut, Ausnehmung
- 50: Motor
- 51: Schneckenrad
- 60: Sensoreinheit
- 64: Führungskontur
- 64.1: erstes Segment
- 64.2: zweites Segment
- 64.3: neutrale Seite

## Patentansprüche

1. Vorrichtung (10) zur Ansteuerung eines Sperrgliedes (11) eines funktionswesentlichen Bauteils (40), insbesondere einer Lenksäule (40) oder eines Gangschalthebels eines Kraftfahrzeuges, mit
einem Getriebe (20), das mit dem Sperrglied (11) in mechanischer Wirkverbindung steht, das in eine Verriegelungsstellung (1) und in eine Entriegelungsstellung (2) und umgekehrt bewegbar ist, wobei
in der Verriegelungsstellung (1) das Sperrglied (11) in das funktionswesentliche Bauteil (40) eingreift und
in der Entriegelungsstellung (2) das Sperrglied (11) losgelöst vom funktionswesentlichen Bauteil (40) ist,
wobei das Getriebe (20) derart ausgeführt ist, dass das Sperrglied (11) bei einer Fehlstellung des Bauteils (40) mindestens in eine Zwischenstellung (3) bringbar ist, die zwischen der Verriegelungsstellung (1) und der Entriegelungsstellung (2) liegt, wobei das Getriebe (20) mindestens ein Führungsmittel (21) aufweist, das formschlüssig das Sperrglied (11) sowohl in der Zwischenstellung (3) als auch in der Verriegelungsstellung (1) hält, so dass eine Bewegung des Sperrgliedes (11) in die Entriegelungsstellung (2) blockiert ist,
**dadurch gekennzeichnet,**
dass das Getriebe (20) ein Antriebsrad (22) aufweist, das mit einer Führungsgeometrie (23) ausgeführt ist, die mit einem Führungselement (12) des Sperrgliedes (11) zusammenwirkt, indem bei der Bewegung des Sperrgliedes (11) in seine jeweilige Stellung (1,2,3) das Führungselement (12) entlang der Führungsgeometrie (23) verfährt, wobei bei einer Fehlstellung des Bauteils (40) das Führungselement (12) an dem an der Führungsgeometrie (23) ausgebildeten Führungsmittel (21) kontaktierend anliegt,
und dass die Führungsgeometrie (23) eine bogenförmige Führungskontur (24,64) für die Bewegung des Sperrgliedes (11) von der Verriegelungsstellung (1) und in eine Entriegelungsstellung (2) und umgekehrt aufweist.

2. Vorrichtung (10) nach Anspruch 1,
**dadurch gekennzeichnet,**
dass die Führungskontur (24) mit einem ersten Segment (24.1) und einem zweiten Segment (24.2) ausgeführt ist, wobei das erste Segment (24.1) einen konstanten Radius und das zweite Segment (24.2) einen spiralförmigen Verlauf aufweist.

3. Vorrichtung (10) nach einem der vorhergehenden Ansprüche,
**dadurch gekennzeichnet,**
dass das Führungsmittel (21) als mindestens ein bogenförmig verlaufender Führungsweg (21.1, 21.2) ausgeführt ist, der durch eine gemeinsame Wandung (25) zur Führungskontur (24) beabstandet ist, wobei insbesondere das Führungsmittel (21) mehrere Führungswege (21.1,21.2) aufweist, die treppenartig an der Führungsgeometrie (23) ausgeführt sind.

4. Vorrichtung (10) nach einem der vorhergehenden Ansprüche,
**dadurch gekennzeichnet,**
dass das Führungselement (12) am Sperrglied (11) beweglich gelagert ist, wobei insbesondere das Führungselement (12) federbelastet am Sperrglied (11) angeordnet ist.

5. Vorrichtung (10) nach einem der vorhergehenden Ansprüche,
**dadurch gekennzeichnet,**
dass eine Sicherheitseinheit (30) mit dem Antriebsrad (22) in Wirkverbindung steht, die das Sperrglied (11) in der Entriegelungsstellung (2) zusätzlich blockierend hält, wobei insbesondere das Antriebsrad (22) eine Steuerkurve (26) aufweist, durch die die Sicherheitseinheit (30) in eine Sicherungslage (4) und in eine Entsicherungslage (5) bringbar ist, wobei in der Sicherungslage (4) das Sperrglied (11) sich in der Entriegelungsstellung (2) und in der Entsicherungslage (5) das Sperrglied (11) in der Verriegelungsstellung (1) befindet.

6. Vorrichtung (10) nach Anspruch 5,
**dadurch gekennzeichnet,**
dass die Sicherheitseinheit (30) federbelastet, relativ zum Sperrglied (11) verschiebbar gelagert ist.

7. Vorrichtung (10) nach einem der vorhergehenden Ansprüche,
**dadurch gekennzeichnet,**
dass das Sperrglied (11) translatorisch entlang einer Führung (13) bewegbar gelagert ist und/oder das Sperrglied (11) mit einer Ausnehmung (14) ausgeführt ist, in die ein Stift (27), der an dem Antriebsrad (22) angeordnet ist, hineinragt.

8. Vorrichtung (10) nach einem der vorhergehenden Ansprüche,
**dadurch gekennzeichnet,**
dass das Antriebsrad (22) um eine Drehachse (22.1) gelagert ist, wobei das Führungselement (12) parallel zur Drehachse (22.1) bewegbar ist.

9. Vorrichtung (10) nach einem der vorhergehenden Ansprüche,
**dadurch gekennzeichnet,**
dass die Steuerkurve (26) exzentrisch am Antriebsrad (22) angeordnet ist.

10. Vorrichtung (10) nach einem der vorhergehenden Ansprüche,
**dadurch gekennzeichnet,**
dass in der Entriegelungsstellung (2) das Führungselement (12) sich in einer Ausgangslage (6) zum Sperrglied (11) befindet, wobei in der Zwischenstellung (3) des Sperrgliedes (11) die Führungsgeometrie (23), insbesondere das Führungsmittel (21) das Führungselement (12) aus der Ausgangslage (6.1) in eine weitere Lage (6.2) parallel zur Drehachse (22.1) bewegt.

11. Vorrichtung (10) nach einem der vorhergehenden Ansprüche,
**dadurch gekennzeichnet,**
dass das Getriebe (20), das Sperrglied (11) sowie die Sicherheitseinheit (30) innerhalb eines Gehäuses (15) angeordnet sind, wobei das Gehäuse (15) eine Öffnung (15a) aufweist, durch die das Sperrglied (11) zumindest in der Verriegelungsstellung (1) hindurchragt und/oder das Antriebsrad (22) eine Antriebsseite (22.2) und eine Abtriebsseite (22.3) aufweist, wobei ein elektrischer Motor (50) an der Antriebsseite (22.2) angreift und die Abtriebsseite (22.3) durch die Führungsgeometrie (23) gebildet ist, die eine Bewegung des Führungselementes (12) und des Sperrgliedes (11) bewirkt.

12. Vorrichtung (10) nach einem der vorhergehenden Ansprüche,
**dadurch gekennzeichnet,**
dass ein erstes Federelement (16a) mit einer Federkraft auf das Sperrglied (11) wirkt, die zur Öffnung (15a) gerichtet ist.

13. Vorrichtung (10) nach einem der vorhergehenden Ansprüche,
**dadurch gekennzeichnet,**
dass das Getriebe (20) einen Freilauf, insbesondere einen Vorlauf und einen Nachlauf aufweist, bei dem das Sperrglied (11) in seiner jeweiligen Stellung (1,2) verbleibt, während das Getriebe (20) aktiviert ist.

14. Vorrichtung (10) nach einem der vorhergehenden Ansprüche,
**dadurch gekennzeichnet,**
dass eine Sensoreinheit (60) zur Ermittlung der Position des Antriebsrades (22) vorgesehen ist, wobei insbesondere die Sensoreinheit (60) einen Inkrementalgeber aufweist, der photoelektrisch oder magnetisch das Antriebsrad (22) abtastet.

15. Vorrichtung (10) nach einem der vorhergehenden Ansprüche,
**dadurch gekennzeichnet,**
dass das Sperrglied (11) ein Kontaktelement (18) aufweist, das am Kopfbereich (29) angreift, wobei insbesondere der Kopfbereich (29) die Führungskontur (64) aufweist, wobei das Kontaktelement (18) während der Bewegung des Sperrgliedes (11) in seine jeweilige Stellung (1,2) entlang der Führungskontur (64) verfährt.

16. Vorrichtung (10) nach einem der vorhergehenden Ansprüche,
**dadurch gekennzeichnet,**
dass das Kontaktelement (18) vorsprungartig am Sperrglied (11) ausgebildet ist, wobei das Sperrglied (11) mit einem zum Kontaktelement (18) beabstandeten Anschlagelement (19) ausgeführt ist, wobei zwischen dem Kontaktelement (18) und dem Anschlagelement (19) ein Freiraum (7) vorliegt, in den der Kopfbereich (29) sich erstreckt, wobei insbesondere das Anschlagelement (19) zum Kopfbereich (29) derart angeordnet ist, dass im Falle eines ungewollten Verbleibens des Sperrgliedes (11) in der Entriegelungsstellung (2) der Kopfbereich (29) das Anschlagelement (19) kurzzeitig kontaktiert, so dass eine Kraft zur Bewegung des Sperrgliedes (11) in Richtung der Lenksäule (40) ausgeübt wird.

17. Vorrichtung (10) nach einem der vorhergehenden Ansprüche,
**dadurch gekennzeichnet,**
dass das Kontaktelement (18) mit einer Anschlagfläche (18b) ausgebildet ist, an der der Kopfbereich (29) mit seiner neutralen Seite (64.3) anliegt.

## Claims

1. A device (10) for activating a blocking element (11) of an important functional component (40), in particular a steering column (40) or a gear shift lever of a motor vehicle, having
a gear (20), which is mechanically operationally linked to the blocking element (11), and which can be moved into a locking position (1) and an unlocking position (2) and vice versa, wherein
said blocking element (11) engages in said important functional component (40) in said locking position (1) and
said blocking element (11) is disengaged from said important functional component (40) in said unlocking position (2),
wherein the gear (20) is implemented such that the blocking element (11) can be put into at least one intermediate position (3), which lies between the locking position (1) and the unlocking position (2), in the event of an incorrect position of the component (40), wherein said gear (20) has at least one guide means (21), which positively holds the blocking element (11) both in the intermediate position (3) and also in the locking position (1), so that a movement of the blocking element (11) into the unlocking position (2) is blocked,
**characterized in that**
the gear (20) has a drive wheel (22), which is embodied with a guide geometry (23) which cooperates with a guide element (12) of the blocking element (11), by the guide element (12) moving along the guide geometry (23) on a movement of the blocking element (11) into its respective position (1, 2, 3), wherein in the event of an incorrect position of the component (40) the guide element (12) lies in a contacting manner against the guide means (21) formed on the guide geometry (23),
and that the guide geometry (23) has a curved guide contour (24, 64) for the movement of the blocking element (11) from the locking position (1) and into an unlocking position (2) and vice versa.

2. The device (10) according to Claim 1,
**characterized in that**
the guide contour (24) is embodied with a first segment (24.1) and a second segment (24.2), wherein the first segment (24.1) has a constant radius and the second segment (24.2) has a spiral course.

3. The device (10) according to one of the preceding claims,
**characterized in that**
the guide means (21) is embodied as at least one guide path (21.1, 21.2) running in a curved manner, which is spaced apart from the guide contour (24) by a shared wall (25), wherein in particular the guide means (21) has several guide paths (21.1, 21.2), which are embodied in a step-like manner on the guide geometry (23).

4. The device (10) according to one of the preceding claims,
**characterized in that**
the guide element (12) is movably mounted on the blocking element (11), wherein in particular the guide element (12) is arranged in a spring-loaded manner on the blocking element (11).

5. The device (10) according to one of the preceding claims,
**characterized in that**
a security unit (30) is in operative connection with the drive wheel (22), said security unit additionally holding the blocking element (11) in the unlocking position (2) in a blocking manner, wherein in particular the drive wheel (22) has a control cam (26), by which the security unit (30) is able to be brought into a securing position (4) and a release position (5), wherein in the securing position (4) the blocking element (11) is situated in the unlocking position (2) and in the release position (5) the blocking element (11) is situated in the locking position (1).

6. The device (10) according to Claim 5,
**characterized in that**
the security unit (30) is mounted in a spring-loaded manner, displaceably relative to the blocking element (11).

7. The device (10) according to one of the preceding claims,
**characterized in that**
the blocking element (11) is mounted movably in a translatory manner along a guide (13), and/or the blocking element (11) is embodied with a recess (14) into which a pin (27), which is arranged on the drive wheel (22), projects.

8. The device (10) according to one of the preceding claims,
**characterized in that**
the drive wheel (22) is mounted about a rotation axis (22.1), wherein the guide element (12) is movable parallel to the rotation axis (22.1).

9. The device (10) according to one of the preceding claims,
**characterized in that**
the control cam (26) is arranged eccentrically on the drive wheel (22).

10. The device (10) according to one of the preceding claims,
**characterized in that**
in the unlocking position (2) the guide element (12) is situated in an initial position (6) to the blocking element (11), wherein in the intermediate position (3) of the blocking element (11) the guide geometry (23), in particular the guide means (21), moves the guide element (12) from the initial position (6.1) into a further position (6.2) parallel to the rotation axis (22.1).

11. The device (10) according to one of the preceding claims,
**characterized in that**
the gear (20), the blocking element (11) and the security unit (30) are arranged within a housing (15), wherein the housing (15) has an opening (15a) through which the blocking element (11) projects at least in the locking position (1), and/or the drive wheel (22) has a drive side (22.2) and an output side (22.3), wherein an electric motor (50) engages on the drive side (22.2) and the output side (22.3) is formed by the guide geometry (23), which brings about a movement of the guide element (12) and of the blocking element (11).

12. The device (10) according to one of the preceding claims,
**characterized in that**
a first spring element (16a) acts with a spring force onto the blocking element (11), which is directed to the opening (15a).

13. The device (10) according to one of the preceding claims,
**characterized in that**
the gear (20) has a freewheel, in particular a forerun and an overrun, in which the blocking element (11) remains in its respective position (1,2) whilst the gear (20) is activated.

14. The device (10) according to one of the preceding claims,
**characterized in that**
a sensor unit (60) is provided for determining the position of the drive wheel (22), wherein in particular the sensor unit (60) has an incremental encoder which scans the drive wheel (22) photoelectrically or magnetically.

15. The device (10) according to one of the preceding claims,
**characterized in that**
the blocking element (11) has a contact element (18) which engages on the head region (29), wherein in particular the head region (29) has the guide contour (64), wherein the contact element (18) moves along the guide contour (64) during the movement of the blocking element (11) into its respective position (1,2).

16. The device (10) according to one of the preceding claims,
**characterized in that**
the contact element (18) is constructed in a projection-like manner on the blocking element (11), wherein the blocking element (11) is embodied with a stop element (19) spaced apart with respect to the contact element (18), wherein between the contact element (18) and the stop element (19) a free space (7) is present, into which the head region (29) extends, wherein in particular the stop element (19) is arranged with respect to the head region (29) such that in the case of an undesired remaining of the blocking element (11) in the unlocking position (2), the head region (29) briefly contacts the stop element (19), so that a force is exerted for moving the blocking element (11) in the direction of the steering column (40).

17. The device (10) according to one of the preceding claims,
**characterized in that**
the contact element (18) is constructed with a stop surface (18b), against which the head region (29) lies with its neutral side (64.3).

## Revendications

1. Dispositif (10) dévolu à l'activation d'un organe de blocage (11) d'un composant (40) fonctionnellement essentiel, en particulier d'une colonne de direction (40) ou d'un levier de changement de vitesses d'un véhicule automobile, comprenant une transmission (20) en liaison mécanique opérante avec ledit organe de blocage (11) pouvant être mû vers une position de verrouillage (1) et vers une position de déverrouillage (2), et inversement, sachant que,
dans la position de verrouillage (1), l'organe de blocage (11) pénètre dans le composant (40) fonctionnellement essentiel, et que
dans la position de déverrouillage (2), ledit organe de blocage (11) est dissocié d'avec ledit composant (40) fonctionnellement essentiel,
la transmission (20) étant réalisée de façon telle que l'organe de blocage (11) puisse être amené, en cas de position erronée du composant (40), à au moins une position intermédiaire (3) située entre la position de verrouillage (1) et la position de déverrouillage (2), ladite transmission (20) étant pourvue d'au moins un moyen de guidage (21) qui maintient ledit organe de blocage (11), par complémentarité de formes, tant dans ladite position intermédiaire (3) que dans ladite position de verrouillage (1), de manière à inhiber un mouvement dudit organe de blocage (11) vers ladite position de déverrouillage (2),
**caractérisé par** le fait
que la transmission (20) présente une roue d'entraînement (22) dotée d'une configuration géométrique de guidage (23) coopérant avec un élément de guidage (12) de l'organe de blocage (11), en ce sens que ledit élément de guidage (12) se déplace le long de ladite configuration géométrique de guidage (23) au cours du mouvement dudit organe de blocage (11) vers sa position (1, 2, 3) respective, sachant que, lorsque le composant (40) occupe une position erronée, ledit élément de guidage (12) est en applique contre le moyen de guidage (21) ménagé sur la configuration géométrique de guidage (23) ;
et que ladite configuration géométrique de guidage (23) est munie d'un profil curviligne de guidage (24, 64) assigné au mouvement dudit organe de blocage (11) de la position de verrouillage (1) à une position de déverrouillage (2), et inversement.

2. Dispositif (10) selon la revendication 1,
**caractérisé par** le fait
que le profil de guidage (24) est constitué d'un premier segment (24.1) et d'un second segment (24.2), ledit premier segment (24.1) et ledit second segment (24.2) présentant, respectivement, un rayon constant et un tracé spiroïdal.

3. Dispositif (10) selon l'une des revendications précédentes,
**caractérisé par** le fait
que le moyen de guidage (21) est réalisé au moins sous la forme d'un chemin de guidage (21.1, 21.2) à étendue curviligne, maintenu à distance du profil de guidage (24) par un cloisonnement commun (25), sachant notamment que ledit moyen de guidage (21) compte plusieurs chemins de guidage (21.1, 21.2) de réalisation étagée sur la configuration géométrique de guidage (23).

4. Dispositif (10) selon l'une des revendications précédentes,
**caractérisé par** le fait
que l'élément de guidage (12) est monté avec mobilité sur l'organe de blocage (11), ledit élément de guidage (12) étant notamment implanté sur ledit organe de blocage (11) avec contrainte élastique.

5. Dispositif (10) selon l'une des revendications précédentes,
**caractérisé par** le fait
qu'une unité de sûreté (30), en liaison opérante avec la roue d'entraînement (22), maintient additionnellement l'organe de blocage (11) dans la position de déverrouillage (2), avec effet d'arrêt, ladite roue d'entraînement (22) comportant, en particulier, une came de commande (26) par l'intermédiaire de laquelle ladite unité de sûreté (30) peut être amenée à une position de sûreté (4) et à une position (5) neutralisant la sûreté, sachant que l'organe de blocage (11) occupe la position de déverrouillage (2) dans ladite position de sûreté (4), et que ledit organe de blocage (11) occupe la position de verrouillage (1) dans ladite position (5) neutralisant la sûreté.

6. Dispositif (10) selon la revendication 5,
**caractérisé par** le fait
que l'unité de sûreté (30) peut coulisser par rapport à l'organe de blocage (11), avec contrainte élastique.

7. Dispositif (10) selon l'une des revendications précédentes,
**caractérisé par** le fait
que l'organe de blocage (11) est monté avec mobilité translatoire le long d'un guide (13) ; et/ou ledit organe de blocage (11) est pourvu d'un évidement (14) dans lequel pénètre une broche (27) située sur la roue d'entraînement (22).

8. Dispositif (10) selon l'une des revendications précédentes,
**caractérisé par** le fait
que la roue d'entraînement (22) est montée autour d'un axe de rotation (22.1), l'élément de guidage (12) étant mobile parallèlement audit axe de rotation (22.1).

9. Dispositif (10) selon l'une des revendications précédentes,
**caractérisé par** le fait
que la came de commande (26) occupe une position excentrée sur la roue d'entraînement (22).

10. Dispositif (10) selon l'une des revendications précédentes,
**caractérisé par** le fait
que, dans la position de déverrouillage (2), l'élément de guidage (12) se trouve dans une position de départ vis-à-vis de l'organe de blocage (11), sachant que, dans la position intermédiaire (3) dudit organe de blocage (11), la configuration géométrique de guidage (23), et notamment le moyen de guidage (21), impriment un mouvement audit élément de guidage (12), parallèlement à l'axe de rotation (22.1), de la position initiale (6.1) à une position (6.2) plus éloignée.

11. Dispositif (10) selon l'une des revendications précédentes,
**caractérisé par** le fait
que la transmission (20), l'organe de blocage (11), ainsi que l'unité de sûreté (30), sont logés à l'intérieur d'un boîtier (15), ledit boîtier (15) présentant un orifice (15a) traversé par ledit organe de blocage (11), au moins dans la position de verrouillage (1) ; et/ou la roue d'entraînement (22) comprend un côté menant (22.2) et un côté mené (22.3), un moteur électrique (50) venant en prise avec ledit côté menant (22.2), et ledit côté mené (22.3) étant constitué par la configuration géométrique de guidage (23) qui provoque un mouvement de l'élément de guidage (12) et dudit organe de blocage (11).

12. Dispositif (10) selon l'une des revendications précédentes,
**caractérisé par** le fait
qu'un premier élément élastique (16a) agit sur l'organe de blocage (11) avec une force élastique dirigée vers l'orifice (15a).

13. Dispositif (10) selon l'une des revendications précédentes,
**caractérisé par** le fait
que la transmission (20) est dotée d'un accouplement à roue libre, en particulier d'une phase d'avance et d'une phase de retard durant laquelle l'organe de blocage (11) demeure dans sa position (1, 2) respective, tandis que ladite transmission (20) est activée.

14. Dispositif (10) selon l'une des revendications précédentes,
**caractérisé par** le fait
qu'une unité de détection (60) est prévue pour déterminer l'emplacement de la roue d'entraînement (22), ladite unité de détection (60) étant notamment munie d'un codeur incrémental qui explore ladite roue d'entraînement (22) en mode photoélectrique ou magnétique.

15. Dispositif (10) selon l'une des revendications précédentes,
**caractérisé par** le fait
que l'organe de blocage (11) présente un élément de contact (18) venant en prise avec la région frontale (29), ladite région frontale (29) étant notamment pourvue du profil de guidage (64), ledit élément de contact (18) se déplaçant le long dudit profil de guidage (64) au cours du mouvement dudit organe de blocage (11) vers sa position (1, 2) respective.

16. Dispositif (10) selon l'une des revendications précédentes,
**caractérisé par** le fait
que l'élément de contact (18) est ménagé sur l'organe de blocage (11) à la manière d'une protubérance, ledit organe de blocage (11) étant doté d'un élément de butée (19) situé à distance dudit élément de contact (18), ledit élément de contact (18) et ledit élément de butée (19) étant séparés par un espace libre (7) dans lequel la région frontale (29) s'engage, sachant notamment que ledit élément de butée (19) est disposé, par rapport à ladite région frontale (29), de façon telle que ladite région frontale (29) entre brièvement en contact avec ledit élément de butée (19) dans le cas où l'organe de blocage (11) demeure involontairement dans la position de déverrouillage (2), de telle sorte qu'une force soit développée pour imprimer, audit organe de blocage (11), un mouvement pointant vers la colonne de direction (40).

17. Dispositif (10) selon l'une des revendications précédentes,
**caractérisé par** le fait
que l'élément de contact (18) est muni d'une surface de butée (18b) contre laquelle la région frontale (29) est en applique par son côté neutre (64.3).
